# EUROPEAN PATENT APPLICATION

(11) **EP 4 818 374 A1**
(43) Date of publication of application: **07.10.2026**
(21) Application number: 25761232.5
(22) Date of filing: 20.02.2025
(51) Int. Cl.: C25B 11/032, C25B 1/04, C25B 9/00, C25B 11/043, H01M 4/96, H01M 8/10

(54) **POROUS CARBON SHEET AND WATER ELECTROLYSIS DEVICE**

(30) Priority: 26.02.2024 JP 2024026219; 20.12.2024 JP 2024224695
(71) Applicant: Toray Industries, Inc., Tokyo 103-8666 (JP)
(72) Inventor: MASUI, Takanari, Otsu-shi, Shiga 520-8558 (JP); WAKATSUKI, Yuya, Otsu-shi, Shiga 520-8558 (JP); ODA, Shinji, Otsu-shi, Shiga 520-8558 (JP); INOUE, Mikio, Otsu-shi, Shiga 520-8558 (JP)
(74) Representative: Prüfer & Partner mbB Patentanwälte · Rechtsanwälte
(86) International application number: PCT/JP2025/005805
(87) International publication number: WO 2025/182758

(57) **Abstract**

An object of the present invention is to provide a low-cost porous carbon sheet that has a high compression deformation ratio when a water electrolysis cell is formed, has no problem of penetration or short circuit, and is also excellent in conductivity, and the present invention relates to a porous carbon sheet that is a sheet-shaped structure having a porous structure in which carbon fibers are bound with a binder, wherein a thickness d0 under an applied pressure of 0.15 MPa is 1.8 to 3.0 mm, a thickness d1 under an applied pressure of 1.0 MPa is 85% or more of the thickness d0 under an applied pressure of 0.15 MPa, and a thickness d2 under an applied pressure of 4.5 MPa is 75% or less of the thickness d0 under an applied pressure of 0.15 MPa.

## Description

### TECHNICAL FIELD

The present invention relates to a porous carbon sheet suitably used as a diffusion layer of a water electrolysis cell or a fuel cell, particularly as a diffusion layer of a cathode-side electrode member of a water electrolyzer.

### BACKGROUND ART

A polymer electrolyte fuel cell, in which a hydrogencontaining fuel gas is supplied to an anode, an oxygen-containing oxidizing gas is supplied to a cathode, and electric power is obtained by an electrochemical reaction occurring at both electrodes, generates a current and water by a reaction between hydrogen and oxygen. In addition, the water electrolyzer generates hydrogen and oxygen by passing a current through water. Such a fuel cell or water electrolyzer generally has a cell formed by stacking a bipolar plate, a diffusion layer, a catalyst layer, an electrolyte membrane, a catalyst layer, a diffusion layer, and a bipolar plate in this order. A cell stack in which a plurality of these cells is stacked is mounted on a water electrolyzer.

Among these, the diffusion layer of the cell of the water electrolyzer is required to have high water permeability for supplying water to an anode catalyst layer and removing water from a cathode catalyst layer, high gas diffusivity for discharging generated hydrogen gas and oxygen gas, and high conductivity for achieving high water electrolysis efficiency, and as a conventional diffusion layer, a porous sheet such as a titanium particle sintered material or a titanium fiber assembly is widely used for achieving high strength, thinning, and improving porosity.

However, such a porous sheet is problematic in that wider adoption for consumer use is difficult because titanium itself is significantly expensive. For this reason, for example, as in Patent Document 1, a porous carbon sheet such as porous carbon paper, which has been conventionally and commonly used as a diffusion layer of a fuel cell, may be applied. In the water electrolysis cell, tightening is performed in the cell stacking direction in order to improve the gas sealability and reduce the contact resistance by increasing the adhesion between the respective members. For this reason, a porous carbon plate in which a large number of carbon fibers are dispersed in a plane as described in, for example, Patent Document 2 commonly tends to be elastically deformed in the thickness direction (has a high cushioning property), and thus has a feature of being hardly broken.

### PRIOR ART DOCUMENTS

### PATENT DOCUMENTS

Patent Document 1: Japanese Patent Laid-Open Publication No. 2023-61911
Patent Document 2: Japanese Patent Laid-open Publication No. H1-77625

### SUMMARY OF THE INVENTION

### PROBLEMS TO BE SOLVED BY THE INVENTION

However, the carbon fiber porous material for the fuel cell as described in Patent Document 1 is commonly produced in many cases by a wet method in which short carbon fibers are dispersed in water and subjected to papermaking, and carbon fibers oriented in the thickness direction of the carbon fiber porous material are generated in a papermaking process. In addition, the carbon fiber porous material is thin with a thickness on the order of approximately several hundred micrometers, and the catalyst layer and the electrolyte membrane are thinner on the order of several micrometers, and thus carbon fibers oriented in the thickness direction may penetrate the catalyst layer and the electrolyte membrane by being tightened after the cell stacking. Further, a short circuit occurs due to penetration, leading to a problem that the cell does not operate normally.

In addition, the porous carbon plate described in Patent Document 2 is thick, and thus the above-described short circuit of the catalyst layer and the electrolyte membrane hardly occur, but the porous carbon plate is made thick, thereby increasing the electrical resistance in the thickness direction, or deteriorating the fluid permeability.

As described above, it is difficult for the porous carbon sheet to prevent penetration by carbon fibers while maintaining porosity or fluid permeability, and it is difficult to obtain a porous carbon sheet suitable for a diffusion layer for a water electrolysis cell.

### SOLUTIONS TO THE PROBLEMS

As a result of intensive studies to solve the above problems, in the present invention, it has been found that the thickness of a porous carbon sheet is sufficiently thick compared to that of a conventional porous carbon sheet for a common fuel cell, and the internal structure of the porous carbon sheet and the carbonization temperature of the porous carbon sheet are adjusted to form a porous carbon sheet having compression properties to be described later, thereby imparting a high cushioning property, improving the electrical conductivity of the porous carbon sheet in the thickness direction, and making it possible to provide a low-cost porous carbon sheet that has a high compression deformation ratio when forming a water electrolysis cell and has no problem of penetration (short circuit), which has been difficult with a conventional porous carbon sheet for a fuel cell. Specifically, the following means is adopted.
(1) A porous carbon sheet comprising a sheet-shaped structure having a porous structure in which carbon fibers are bound with a binder, wherein a thickness d0 under an applied pressure of 0.15 MPa is 1.8 to 3.0 mm, a thickness d1 under an applied pressure of 1.0 MPa is 85% or more of the thickness d0 under an applied pressure of 0.15 MPa, and a thickness d2 under an applied pressure of 4.5 MPa is 75% or less of the thickness d0 under an applied pressure of 0.15 MPa.
(2) The porous carbon sheet according to (1), wherein the electrical resistivity in a thickness direction under an applied pressure of 1.0 MPa is 120 mΩ·cm or less.
(3) The porous carbon sheet according to (1), wherein the electrical resistivity under an applied pressure of 1.0 MPa is 80 mΩ·cm or less.
(4) The porous carbon sheet according to any one of (1) to (3), wherein the electrical resistivity in a thickness direction under an applied pressure of 4.5 MPa is 90 mΩ·cm or less.
(5) The porous carbon sheet according to any one of (1) to (3), wherein the electrical resistivity under an applied pressure of 4.5 MPa is 60 mΩ·cm or less.
(6) The porous carbon sheet according to any one of (1) to (5), comprising conductive nonmetal particles having an equivalent volume sphere diameter of 10 to 30 µm.
(7) The porous carbon sheet according to (6), comprising the conductive nonmetal particles in a ratio of 10 to 50 mass% in 100 mass% of the porous carbon sheet.
(8) The porous carbon sheet according to any one of (1) to (7), wherein a thickness recovery ratio R1 when the porous carbon sheet is pressurized to 4.5 MPa and then depressurized to 1.0 MPa is 80% or more.
(9) The porous carbon sheet according to any one of (1) to (8), wherein a difference between a thickness recovery ratio R1 when the porous carbon sheet is pressurized to 4.5 MPa and then depressurized to 1.0 MPa and a thickness recovery ratio R2 when the porous carbon sheet is then pressurized again to 4.5 MPa and then depressurized to 1.0 MPa is 5% or less.
(10) A water electrolyzer comprising the porous carbon sheet according to any one of (1) to (9) as a cathode-side electrode member.

### EFFECTS OF THE INVENTION

Using the porous carbon sheet of the present invention as a diffusion layer of a water electrolysis cell allows stable generation of hydrogen for a long time.

### BRIEF DESCRIPTION OF THE DRAWINGS

Fig. 1 shows an example of a schematic cross-sectional view of a water electrolysis cell in a water electrolyzer of the present invention.
Fig. 2 shows a schematic view of one embodiment of a compression step in one example of a method for producing the porous carbon sheet of the present invention.
Fig. 3 shows a schematic view of one embodiment of a method for measuring the thickness of the porous carbon sheet of the present invention.
Fig. 4 shows a schematic view of one embodiment of a method for measuring electrical resistance in a thickness direction of the porous carbon sheet of the present invention.
Fig. 5 shows a schematic view of one embodiment of a method for checking whether or not short carbon fibers of the porous carbon sheet of the present invention protrude.

### EMBODIMENTS OF THE INVENTION

Hereinafter, an example of an embodiment of the porous carbon sheet of the present invention will be described with reference to the drawings. The present invention is not limited to these embodiments, and description of preferable devices, configurations thereof, numerical ranges, and the like in the description of individual embodiments can be interpreted as description of the porous carbon sheet of the present invention as a superordinate concept at the same time.

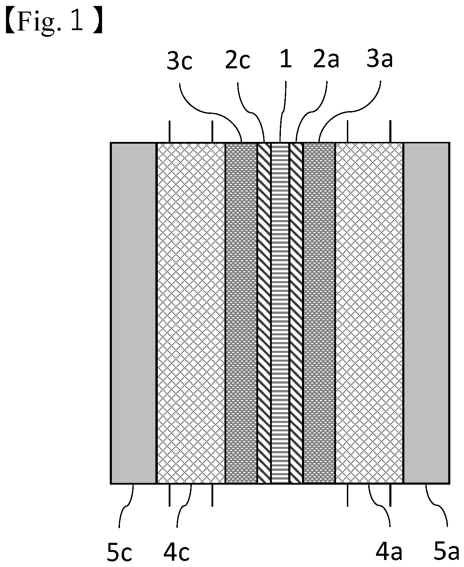

Fig. 1 shows a schematic cross-sectional view of an example of the water electrolysis cell in the water electrolyzer of the present invention. In the basic structure of the water electrolysis cell, an electrolyte membrane 1 is sandwiched between a pair of catalyst layers 2a and 2c, a stacked body sandwiched between a pair of diffusion layers 3a and 3c is formed, bipolar plates 4a and 4c having flow paths formed so as to surround the stacked body are disposed, and main electrodes 5a and 5c are disposed outside the bipolar plates 4a and 4c.

The electrolyte membrane 1 is typically a proton conductive ion exchange membrane having a thickness of approximately 8 µm formed of a polymer electrolyte material, and the electrolyte membrane used is formed of, for example, a perfluorosulfonic acid polymer having sulfonic acid groups at side chain terminals. In the catalyst layers 2a and 2c, a material including carbon particles supporting a catalytic metal causing an electrochemical reaction to proceed such as a water electrolysis reaction and a polymer electrolyte having proton conductivity is formed into a layer having a thickness of approximately 5 µm. As the catalytic metal, for example, platinum or a platinum alloy including platinum and another metal such as ruthenium is used. In the water electrolyzer of the present invention, the cathode-side diffusion layer 3c is a layer consisting of the porous carbon sheet of the present invention. The anode-side diffusion layer 3a may also be a layer consisting of the porous carbon sheet of the present invention.

In a water electrolysis cell, a porous material formed of a highly corrosion-resistant metal such as titanium is often employed for the anode-side diffusion layer 3a where oxygen gas is generated by a water electrolysis reaction, in order to prevent oxidation. Typically, the thickness of the porous material is approximately 175 µm. The cathode-side diffusion layer 3c of the water electrolysis cell is formed of the porous carbon sheet of the present invention.

In the case of the water electrolysis cell of Fig. 1, in a state where positive and negative voltages are applied to the main electrodes 5a and 5c, respectively, water is supplied through a flow path disposed in the anode-side bipolar plate 4a, passes through the anode-side diffusion layer 3a, oxygen gas and protons are generated in the anode-side catalyst layer 2a, electrons are emitted and transmitted to the main electrode 5a, and the oxygen gas is recovered through the flow path disposed in the anode-side bipolar plate 4a. The protons reach the cathode-side catalyst layer 2c through the electrolyte membrane 1, where the protons receive electrons from the cathode-side main electrode 5c to become hydrogen gas, which is then recovered to the flow path disposed in the cathode-side bipolar plate 4c through the cathode-side diffusion layer 3c.

The porous carbon sheet of the present invention is a sheet-shaped structure having a porous structure in which carbon fibers are bound with a binder, and examples thereof include carbon paper formed by binding short carbon fibers with a resin carbide or the like, and carbon fibers of a carbon fiber fabric or a carbon fiber nonwoven fabric bound with a resin carbide or the like. When the carbon paper is used, it is preferable that the short carbon fibers have no remarkable orientation in the sheet plane and exist in a substantially random direction. In addition, the binder in the present invention refers to a substance that fixes carbon fibers to each other and improves the mechanical strength of the porous carbon sheet.

The thickness d0 of the porous carbon sheet of the present invention under an applied pressure of 0.15 MPa is 1.8 to 3.0 mm so as to prevent breakage of the diffusion layer due to shearing or compression by irregularities of the gas flow path provided in the bipolar plate caused by the high fastening pressure of the water electrolysis cell stack, and further breakage of the electrolyte layer due to propagation of pressure or deformation to the electrolyte layer. The thickness is preferably 1.9 to 2.4 mm. When the thickness d0 is less than 1.8 mm in a case of use as the diffusion layer of the water electrolysis cell, breakage of the diffusion layer or the film due to a high fastening pressure may not be prevented. In addition, when the thickness d0 exceeds 3.0 mm, supply and discharge of water and a generated gas may be hindered, causing an increase in equipment cost due to an increase in cost of a diffusion layer and an increase in size of a water electrolysis cell stack.

In the present invention, when the thickness of the porous carbon sheet is measured under a certain of an applied pressure, the thickness d0 at 0.15 MPa is measured in a state where the porous carbon sheet is placed on a smooth surface plate and applied with 0.15 MPa. Measurements are made at five different sites, and the arithmetic average of the measured values is defined as the thickness d0 at 0.15 MPa. In addition, the thicknesses of the porous carbon sheet under applied pressures of 1.0 MPa and 4.5 MPa are measured by applying a predetermined pressure to a small sample of the porous carbon sheet using a universal testing machine and a compression jig and using a plurality of micrometers attached to the compression jig. The arithmetic average of the values of the plurality of micrometers is defined as the thickness under a predetermined pressure.

In the case of measuring the thickness in a state where the predetermined pressure is applied, measurement is made on a porous carbon sheet to which a pressure exceeding the predetermined pressure has never been applied. In addition, the thickness is measured during 5 to 30 seconds after application of a predetermined pressure.

In a conventional water electrolysis cell, an assembly of a thin porous carbon sheet and a titanium mesh is used as a diffusion layer, and a porous carbon sheet is often disposed on the catalyst layer side and used. As described above, the reason why the titanium mesh is often applied is that titanium is excellent in permeability of a gas (hydrogen, oxygen) generated by water electrolysis and is also excellent in strength, conductivity, and corrosion resistance, but titanium itself is expensive, and thus the titanium mesh or the water electrolyzer inevitably becomes expensive. In contrast, the porous carbon sheet of the present application is excellent in gas permeability, strength, and conductivity, and thus it is not necessary to use an expensive titanium mesh by using the porous carbon sheet having a thickness within the above range under an applied pressure of 0.15 MPa as at least the cathode-side diffusion layer, and a significant cost reduction effect is expected.

The porous carbon sheet of the present invention exhibits various compression properties for each applied pressure. Specifically, the thickness d1 under an applied pressure of 1.0 MPa corresponding to the stop state of the water electrolyzer is 85% or more, preferably 90% or more of the thickness d0 under an applied pressure of 0.15 MPa. In addition, the thickness d2 under an applied pressure of 4.5 MPa corresponding to the operating state of the water electrolyzer is 75% or less, preferably 70% or less of the thickness d0 under an applied pressure of 0.15 MPa. When the thickness d1 of the porous carbon sheet under an applied pressure of 1.0 MPa is less than 85% of the thickness d0 of the porous carbon sheet under an applied pressure of 0.15 MPa, the compressive deformation allowance until the porous carbon sheet is further pressurized to 4.5 MPa in the operating state is reduced, a pressure difference is generated between the groove portion and the rib portion of the bipolar plate due to the high fastening pressure of the cell stack, the porous carbon sheet used as the diffusion layer is damaged by shearing or compression, and the electrolyte layer is easily damaged by the pressure difference or deformation of the porous carbon sheet. In addition, the short carbon fibers penetrate the catalyst layer and the electrolyte membrane, whereby the membrane is easily broken. It is not preferable that the thickness d2 under an applied pressure of 4.5 MPa is larger than 75% of the thickness d0 under an applied pressure of 0.15 MPa, because the electrical resistance in the thickness direction of the porous carbon sheet during the operation of the water electrolyzer increases, and the water electrolysis efficiency decreases. Using the porous carbon sheet having compression properties as described above as the diffusion layer enhances adhesion between the diffusion layer and other members during operation of the water electrolyzer, and allows maximization of the amount of current contributing to water electrolysis, thus allowing high hydrogen generation efficiency to be maintained.

The compression properties of the porous carbon sheet of the present invention can be achieved by controlling the shape of the binder so as not to cause steric hindrance during compression of the porous carbon sheet. A Specific example of the production method to be described later includes setting the solution viscosity at 25°C to be in the range of 2.0 to 5.0 mPa·s by increasing the ratio of the organic compound in the solution including the organic compound with which the precursor fiber sheet is impregnated. Alternatively, the solvent ratio is lowered to suppress the movement of the organic compound in the precursor fiber sheet during evaporation of the solvent during drying after impregnation. Setting the solution viscosity to the above range or lowering the solvent ratio can prevent the binder from being excessively continuous in the thickness direction of the porous carbon sheet inside the porous carbon sheet, and can prevent the carbide from sterically hindering the porous carbon sheet and making it difficult to compress the porous carbon sheet when pressure is applied in the thickness direction of the porous carbon sheet mounted on the water electrolyzer. In addition, containing the conductive nonmetal particles in the solution can facilitate the shape control of the carbide of the organic compound. In addition, in the carbonization step in an example of the production method described later, the compression properties can be controlled to fall within the range of the porous carbon sheet of the present invention by increasing the carbonization temperature.

In the porous carbon sheet of the present invention, the electrical resistivity in the thickness direction under an applied pressure of 1.0 MPa is preferably 120 mΩ·cm or less, more preferably 100 mΩ·cm or less, and still more preferably 80 mΩ·cm or less. In addition, the electrical resistivity under an applied pressure of 4.5 MPa is preferably 90 mΩ·cm or less, more preferably 70 mΩ·cm or less, and still more preferably 60 mΩ·cm or less. The electrical resistivity of the porous carbon sheet under each pressure is within the above range, thereby allowing suppression of a decrease in current density when the porous carbon sheet of the present invention is used as a water electrolyzer, and allowing favorable hydrogen generation efficiency to be achieved. Examples of the method for achieving these ranges of electrical resistivity include a method in which a precursor fiber sheet is carbonized at a temperature of 2,500°C or more to graphitize carbon fibers and a binder in the precursor fiber sheet in a carbonization step in an example of a method for producing a porous carbon sheet described later. In addition, the conductive nonmetal particles are contained in the precursor fiber sheet, thereby allowing reduction of the electrical resistance of the porous carbon sheet. Further, setting the particle diameter of the conductive nonmetal particles to the range described later can achieve further reduction in electrical resistance.

The water electrolysis cell on which the porous carbon sheet is mounted is repeatedly used, and thus the thickness recovery ratio R1 when the porous carbon sheet is pressurized once to the operating condition of the water electrolyzer, that is, 4.5 MPa and then the pressure is reduced to the stop condition, that is, 1.0 MPa is preferably 80% or more, more preferably 90% or more, and still more preferably 95% or more. The thickness recovery ratio R1 is 80% or more, thereby making it possible to maintain the adhesion state between the cell members even when the operation and the stop of the water electrolyzer are repeated, and thus it is possible to perform stable and highly efficient water electrolysis for a long period of time.

The thickness recovery ratio R1 in the present invention is calculated by R1 = d1'/d1 × 100 (%), where d1 is a thickness under an applied pressure of 1.0 MPa, and d1' is a thickness when the pressure is once increased to 4.5 MPa and then reduced to 1.0 MPa.

In addition, in the case where the thickness recovery ratio is measured and then the pressure is increased again to 4.5 MPa and reduced to 1.0 MPa, the thickness recovery ratio is defined as R2, and the difference between the thickness recovery ratio R1 and the thickness recovery ratio R2 is preferably 5% or less, more preferably 3% or less, and still more preferably 2% or less. The thickness recovery ratio R2 is calculated by R2 = d1''/d1 × 100 (%), where d1'' is a thickness when the pressure is increased again to 4.5 MPa and then decreased to 1.0 MPa after measurement of d1'. When d1, d1', and d1" are measured, the measurement is performed in 5 to 30 seconds after the pressure of 1.0 MPa is applied. In addition, when d1 is measured, measurement is made on a porous carbon sheet to which a pressure of 1.0 MPa or more has never been applied.

Then, an example of a specific configuration of the porous carbon sheet having the above features will be described.

As the porous carbon sheet of the present invention, it is preferable to use carbon paper. That is, the structure is preferably formed by comprising short carbon fibers having no significant orientation in the sheet plane and a binder, and bonding at least a part of the short carbon fibers with the binder.

The binder is preferably a carbonized product of an organic compound, and as the organic compound, it is preferable to use a phenol resin having a small mass change before and after carbonization and excellent handleability, and particularly, it is more preferable to use a novolac-type phenol resin and/or a resol-type phenol resin.

The average diameter of the carbon fibers constituting the porous carbon sheet is preferably 6 to 20 µm, more preferably 6 to 13 µm, and still more preferably 6 to 10 µm in order to obtain a suitable compression deformation ratio and mechanical strength. When the average diameter of the carbon fibers exceeds 20 µm, the number of carbon fibers included per unit volume of the porous carbon sheet decreases, and thus a conductive path in the thickness direction is less likely to be formed, and electrical resistance deteriorates. Herein, the average diameter of the carbon fibers can be determined by measuring the fiber diameter of any 20 carbon fibers from a 1,000× magnification image of a porous carbon sheet obtained by an electron microscope and taking the arithmetic average value thereof.

As the carbon fibers, polyacrylonitrile (PAN)-based carbon fibers, rayon-based carbon fibers, phenol-based carbon fibers, pitch-based carbon fibers, and the like can be used singly or in combination, and among these, PAN-based carbon fibers and pitch-based carbon fibers are preferably used, and particularly PAN-based carbon fibers are preferably used because a porous carbon sheet having excellent mechanical strength and excellent handleability can be obtained.

The porous carbon sheet preferably comprises conductive nonmetal particles. The conductive nonmetal particles preferably include carbon powder and/or carbon black. In addition, the carbon powder is preferably a graphite powder. Comprising the conductive nonmetal particles improves the conductivity of the porous fiber sheet. When only the purpose of improving conductivity is considered, it may appear possible to contain metal particles, but when using as a porous carbon sheet mounted in a water electrolysis cell, the current density becomes nonuniform, hydrogen generation efficiency is reduced, and a radical generation reaction is promoted in the metal particle-containing portion, and the electrolyte membrane may be decomposed by the generated radicals.

In the case of a porous carbon sheet containing conductive nonmetal particles, the equivalent volume sphere diameter of the conductive nonmetal particles is preferably 0.01 to 30 µm, more preferably 3 to 30 µm, and still more preferably 10 to 30 µm. When the equivalent volume sphere diameter of the conductive nonmetal particles is in this range, a conductive path is formed in the porous carbon sheet in the sheet thickness direction by the conductive nonmetal particles, and conductivity is improved. When the equivalent volume sphere diameter is more than 30 µm, the conductive nonmetal particles become an obstacle that hinders the flow of the gas generated by water electrolysis, and the gas permeation resistance inside the sheet may increase. In addition, the conductive nonmetal particles are less likely to be uniformly present in the porous carbon sheet, which may cause steric hindrance during compression of the porous carbon sheet. Herein, in the present specification, when the equivalent volume sphere diameter is referred to, a sphere having the same volume as the volume of the particles obtained by the laser diffraction scattering method is assumed, and the median (volume basis) of the sphere diameter distribution is used.

Then, an example of a specific method for producing the porous carbon sheet having the above features will be described.

Examples of the method for producing the porous carbon sheet of the present invention include a production method comprising: an impregnation step of impregnating a precursor fiber sheet including carbon fiber or a carbon fiber precursor with an organic substance; a compression step of stacking one or more precursor sheets after the impregnation step and performing a hot pressing treatment; and a carbonization step of carbonizing the precursor fiber sheet after the compression step.

As the precursor fiber sheet, a carbon fiber paper material, a carbon fiber nonwoven fabric, a carbon fiber fabric, or the like is preferably used. A method may be employed in which a sheet using precursor fibers of carbon fibers such as a flame resistant fiber nonwoven fabric or a flame resistant yarn woven fabric using acrylic flame resistant fibers or the like is used as a precursor fiber sheet, and the sheet is formed of carbon fibers in the carbonization step described later.

Using a carbon fiber paper material as the precursor fiber sheet can provide carbon paper as a porous carbon sheet. The carbon paper is particularly preferable because the orientation of the carbon fibers in the sheet in-plane direction is uniform, and the number of carbon fibers oriented in the direction passing through the sheet surface is small, and thus the handleability is favorable, the mechanical strength and the restoring force of the thickness of the porous carbon sheet are improved, and the through-short circuit of the electrolyte membrane is small.

When a carbon fiber paper material is used as the precursor fiber sheet, the length of the carbon fiber is preferably within a range of 3 to 12 mm. It is preferable that the length of the carbon fiber is within this range, because favorable dispersibility can be obtained in papermaking of the carbon fiber, and a carbon fiber sheet having high tensile strength and being hardly broken can be obtained.

When a precursor fiber sheet including carbon fibers is used, the carbon fibers used may be any of polyacrylonitrile (PAN)-based carbon fibers, pitch-based carbon fibers, rayon-based carbon fibers, and phenol-based carbon fibers, and PAN-based carbon fibers or pitch-based carbon fibers that can increase the bending strength and tensile strength of the obtained carbon fiber sheet are preferably used, and PAN-based carbon fibers are more preferably used.

For the purpose of improving the process passability for obtaining the precursor fiber sheet, starch, PVA, or the like can be added to the carbon fiber paper material.

In the impregnation step, the precursor fiber sheet is impregnated with a solution obtained by dissolving the binder or the precursor of the binder in an organic solvent. The precursor of the binder refers to a substance that acts as an adhesive for forming the stacked precursor fiber sheet into a thin integrated product when hot pressed in the compression step, and becomes a binder through the carbonization step described later, and those including an organic compound are preferably used. The content of the organic compound is preferably 30 mass% or more and 70 mass% or less in 100 mass% of the precursor fiber sheet. The content of the organic compound is 30 mass% or more, whereby delamination in the carbonization step can be prevented when a plurality of precursor fiber sheets are stacked in the compression step, and the restoring force of the short carbon fibers curved inside the precursor fiber sheet can be suppressed by the binding force of the organic compound, and thus the destruction of the internal structure of the porous carbon sheet caused by the restoration of the curved short carbon fibers can be suppressed. In addition, the content is 70 mass% or less, thereby allowing improvement in the fluid permeability of the porous carbon sheet. As the organic compound, a thermoplastic resin such as polyvinyl alcohol (PVA), a phenol resin, or the like can be used. In addition, when the conductive nonmetal particles are contained in the porous carbon sheet, the conductive nonmetal particles may be dispersed in the solution.

The content of the conductive nonmetal particles is preferably 10 to 50 mass% in 100 mass% of the porous carbon sheet. It is preferable that the content is 10 mass% or more, because conductivity can be improved. When the content is 50 mass% or less, it is possible to suppress deterioration of adhesiveness between precursor fiber sheets in the compression step and difficulty of integration.

In the compression step, precursor fiber sheets are stacked and subjected to the hot pressing treatment. It is preferable to perform the hot pressing treatment with a pair of heating plates positioned in parallel to each other.

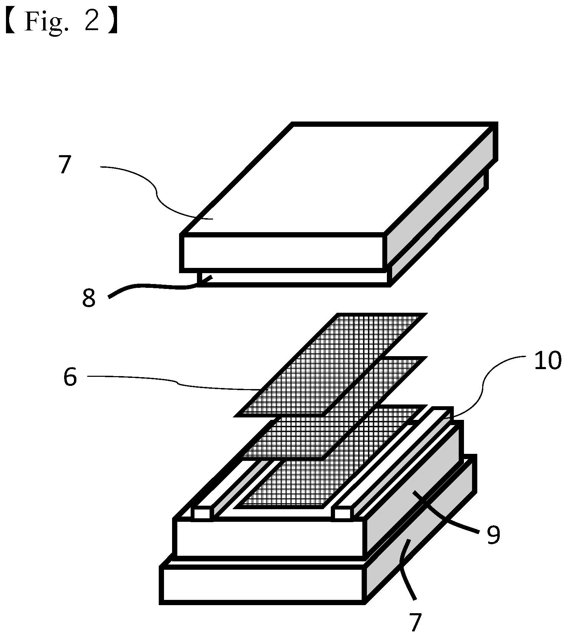

Fig. 2 is a schematic view illustrating one embodiment of a compression step in the method for producing the porous carbon sheet of the present invention. Any number of precursor fiber sheets 6 are stacked so as to have a desired thickness as shown in the drawing, and these are compressed and integrated by an upper heating plate 8 and a lower heating plate 9 by hot press 7. In this case, it is also preferable to regulate the thickness with a spacer 10.

Adjusting the number of stacked precursor fiber sheets to be stacked in the compression step and performing a carbonization process at a temperature of 2,500°C or more can provide the porous carbon sheet of the present invention having all of a thickness, compression properties under various conditions, and high conductivity.

In the carbonization step, a batch-type heating furnace can be used. In the carbonization step, it is preferable to perform primary carbonization at a maximum temperature of 500 to 1,000°C and secondary carbonization at a maximum temperature of 2,500°C or more. When the primary carbonization and the secondary carbonization are performed, it is preferable that the precursor fiber sheet after the compression step is charged into a heating furnace as the primary carbonization, heated to 500 to 1,000°C, held for a certain period of time, and then cooled. In this case, a plurality of precursor fiber sheets may be carbonized at the same time, but a certain number of precursor fiber sheets and carbon plates may be alternately stacked for the purpose of equalizing heat treatment efficiency and improving the efficiency of stacking work. In the secondary carbonization, the precursor fiber sheet after the primary carbonization is preferably heat-treated at a maximum temperature of 2,500°C or more. Performing the heat treatment at a maximum temperature of 2,500°C or more causes the graphitization of the carbon fiber and the organic compound to sufficiently proceed. In particular, phenol resin carbide, which is often used as a binder, is also called glassy carbon, is fragile and brittle, but is changed from a brittle material to an elastic material by graphitization, and the strength is also increased. In addition, it is preferable that the mechanical strength of the short carbon fibers is also increased because preferable compression properties can be exhibited or favorable conductivity can be exhibited. In addition, the maximum temperature is more preferably higher from the viewpoint of the degree of progress of graphitization, but is preferably 3,000°C or less from the viewpoint of durability and consumed energy of the heating furnace. The heat treatment time in the secondary carbonization is preferably 10 minutes or more, and more preferably 20 minutes or more in order to sufficiently progress the graphitization of the carbon fiber and the binder. Similarly to the primary carbonization, a plurality of precursor fiber sheets may be simultaneously carbonized, but a certain number of precursor fiber sheets and carbon plates may be alternately stacked for the purpose of equalizing heat treatment efficiency.

### EXAMPLES

Hereinafter, the present invention will be described further in detail by way of examples, but the present invention is not limited to these examples described below.

### <Measurement of thickness of porous carbon sheet>

### · Thickness (d0) under an applied pressure of 0.15 MPa

A sample of 0.1 m square was cut out from the porous carbon sheet. Using a micrometer having a circular probe with a diameter of 5 mm, measurement was performed by applying a surface pressure of 0.15 MPa to the sample left on a smooth surface plate. The thickness was measured 10 seconds after the surface pressure was applied. The measurement was performed at a total of 5 points including four corners and a center of the sample, and an arithmetic average value thereof was defined as a thickness d0 under an applied pressure of 0.15 MPa.

### · Thickness (d1) under applied pressure of 1.0 MPa and thickness (d2) under applied pressure of 4.5 MPa

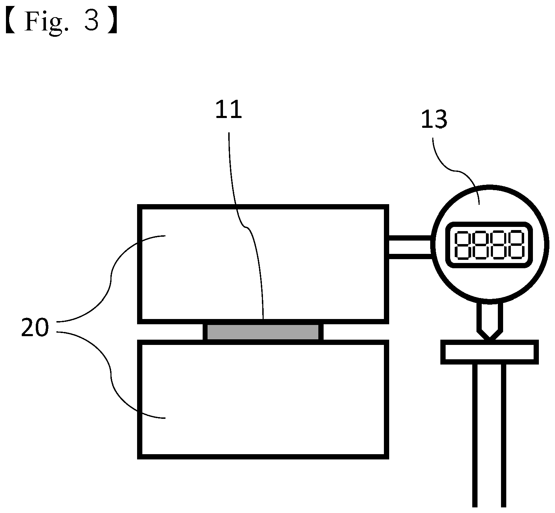

Fig. 3 shows an aspect of the present measurement. A sample 11 (5.0 cm²) having a 2.23 cm square was cut out from the porous carbon sheet for which d0 was measured. First, in a state where only the compression jig 20 was set in a precision universal testing machine AUTOGRAPH AG-Xplus manufactured by Shimadzu Corporation and pressurization was performed at a sufficient pressure (2,500 N in this testing machine), the values of the micrometer 13 fixed to four locations around the compression jig 20 were set to 0. In Fig. 3, only one is illustrated for simplification. Then, the sample 11 was sandwiched from above and below by the compression jig 20, and when the sample 11 was pressurized such that a pressure of 1.0 MPa was applied to the sample 11 from above, the values of the four micrometers 13 were read, and the average value thereof was defined as a thickness d1 of 1.0 MPa. Thereafter, the pressure was continuously applied so as to apply a pressure of 4.5 MPa, and the thickness d2 at that time was measured in the same manner. The thicknesses d1 and d2 were measured 10 seconds after the above pressure was applied.

### <Measurement of thickness recovery ratio of porous carbon sheet>

The thickness under an applied pressure of 4.5 MPa was measured by the procedure of <Measurement of thickness of porous carbon sheet>, and then the thickness d1' of the porous carbon sheet when the pressure was reduced to 1.0 MPa was measured in the same manner. The thickness d1' was measured 10 seconds after the pressure was reduced to 1.0 MPa. In addition, in the case where d1' was measured and then the pressure was increased again to 4.5 MPa and reduced to 1.0 MPa, the thickness d1'' of the porous carbon sheet was measured in the same manner as d1'. The thickness recovery ratio R1 was calculated by the following formula (I), and the thickness recovery ratio R2 was calculated by the following formula (II).
$Thickness recovery ratio R 1 \left(%\right) = d 1 ′ / d 1 \times 100$ (I) $Thickness recovery ratio R 2 \left(%\right) = d 1 " / d 1 \times 100$ (II)

### <Measurement of thickness-direction electrical resistivity of porous carbon sheet>

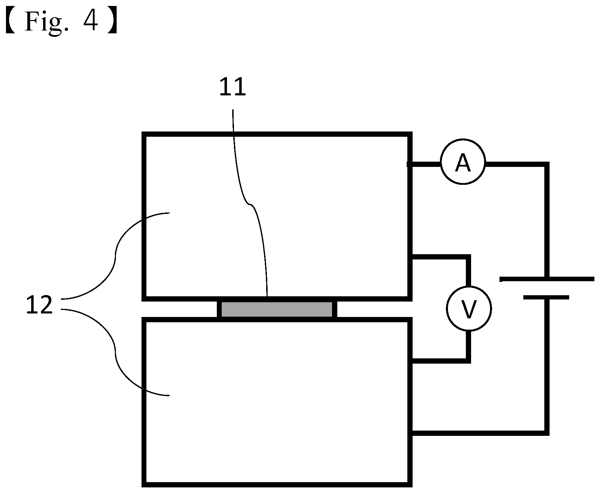

Fig. 4 shows an aspect of the present measurement. A sample 11 (5.0 cm²) having a 2.23 cm square was cut out from the porous carbon sheet. The sample was sandwiched from above and below by two gold-plated stainless steel blocks 12 provided with terminals for current and voltage, and a load was applied to the sample 11 from above the gold-plated stainless steel block 12 by a precision universal testing machine AUTOGRAPH AG-Xplus (not shown in Fig. 4) manufactured by Shimadzu Corporation such that a predetermined pressure (1.0 MPa or 4.5 MPa) was applied. A current of 1 A was passed between the current terminals connected to the two gold-plated stainless steel blocks 12, a voltage V between the voltage terminals connected to the same gold-plated stainless steel block 12 was measured, and the electrical resistivity in the thickness direction was calculated by the following formula (III). The above voltage V was measured 10 seconds after a predetermined pressure was applied. Herein d denotes the thickness under the corresponding pressure measured in <Measurement of thickness of porous carbon sheet>. That is, when calculating the electrical resistivity under an applied pressure of 1.0 MPa, d represents the thickness d1 of the porous carbon sheet under an applied pressure of 1.0 MPa, and when calculating the electrical resistivity under an applied pressure of 4.5 MPa, d represents the thickness d2 of the porous carbon sheet under an applied pressure of 4.5 MPa. 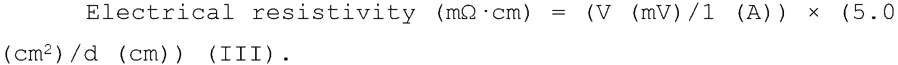 Electrical resistivity (mΩ·cm) = (V (mV)/1 (A)) × (5.0 (cm2)/d (cm)) (III).

### <Measurement of areal weight of porous carbon sheet>

Five samples of 0.1 m square were cut out from the porous carbon sheet. Each sample was left standing on a precision electronic balance and weighed, and the arithmetic average of the numerical values divided by the area (0.01 m²) was used to calculate the areal weight of the porous carbon sheet.

### <Confirmation of whether short carbon fibers protrude from surface of porous carbon sheet>

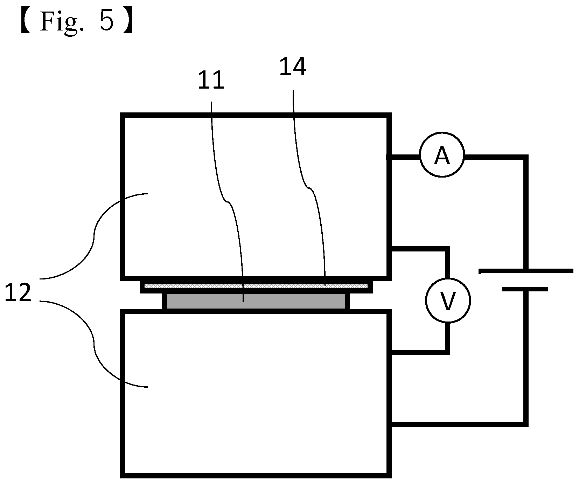

Presence or absence of short carbon fibers protruding from the surface of the porous carbon sheet defined in the present invention was confirmed by the following procedures (1) to (3). Fig. 5 shows an aspect of the present measurement.
(1) Five samples with 4 cm square (hereinafter, referred to as a sample 11) were cut out from the porous carbon sheet, and a polymer electrolyte membrane 14 "Nafion (registered trademark)" NR211 (manufactured by DuPont, film thickness: 25 µm) cut out into a 5.5 cm square was overlapped on one surface of the sample. Herein, each side of the polymer electrolyte membrane 14 and each side of the sample 11 were made parallel to each other and overlapped such that the center of the polymer electrolyte membrane 14 was aligned with the center of the sample 11.
(2) The overlapped polymer electrolyte membrane 14 and sample 11 were sandwiched between two gold-plated stainless steel blocks 12 from above and below, and were pressurized with a precision universal testing machine AUTOGRAPH AG-Xplus (not shown in Fig. 5) manufactured by Shimadzu Corporation such that the pressure applied to the sample 11 was 1.0 MPa. In this case, in order for the two gold-plated stainless steel blocks 12 not to be in direct contact with each other, the sample 11 was sandwiched such that the center thereof was aligned with the centers of the gold-plated stainless steel blocks 12.
(3) A DC voltage of 1.0 V was applied between the gold-plated stainless steel blocks 12 using a digital multimeter to measure the current between the blocks, and it was confirmed whether the current flowed. The current flowing means that the short carbon fibers protrude from the sample 11 and penetrate the polymer electrolyte membrane 14.

After the above (1) to (3) were performed, the sample 11 was turned upside down to bring another surface of the sample 11 into contact with the polymer electrolyte membrane 12, and the above operations (1) to (3) were repeated. Five samples 11 were prepared, and measurements were performed twice for a sample on the front side and back side, that is, ten measurements in total, and the protrusion of short carbon fibers was determined to be "absent" when the current did not exceed 10 mA in nine or more measurements, whereas determined to be "present" when a current exceeding 10 mA was observed in two or more measurements.

### (Example 1)

Polyacrylonitrile-based carbon fiber "Torayca (registered trademark)" T300 (average single fiber diameter: 7 µm, number of single fibers: 6,000) manufactured by Toray Industries, Inc. was cut into a length of 12 mm, and a long sheet-shaped carbon fiber paper material having a width of 1,000 mm and a length of 1,000 m was continuously formed by using water as a papermaking medium. The binder was applied to the long carbon fiber paper material and dried to produce a long carbon fiber paper material having an areal weight of 50 g/m².

The long carbon fiber paper material was continuously impregnated with a 25 mass% methanol solution (viscosity at 25°C: 2.5 mPa·s) of a resin component (a mixture of a novolac type phenolic resin and a resol type phenolic resin at a solid content mass ratio of 1:1), then dried, and cut every 1.0 m to obtain a precursor fiber sheet having an areal weight of 100 g/m².

Then, 15 of the precursor fiber sheets were stacked and disposed between the hot plates of the hot pressing machine in which the pair of hot plates was set to be parallel to each other, and the resin component was cured by hot pressing under the conditions of 155°C and 0.6 MPa for 30 minutes. The precursor fiber sheet obtained by curing the resin component was charged into a batch-type heating furnace, primarily carbonized at a maximum temperature of 1,000°C under an inert atmosphere, and then secondarily carbonized at a maximum temperature of 2,500°C under an inert atmosphere to obtain a porous carbon sheet. The obtained porous carbon sheet was subjected to various measurements in accordance with <Measurement of thickness of porous carbon sheet>, <Measurement of electrical resistance of porous carbon sheet>, <Measurement of areal weight of porous carbon sheet>, and <Confirmation of presence or absence of short carbon fibers protruding from surface of porous carbon sheet> described above. The evaluation results were as shown in Table 1.

### (Example 2)

A porous carbon sheet was obtained in the same manner as in Example 1 except that a graphite powder (equivalent volume sphere diameter: 5 µm), a resin component (a mixture of a novolac type phenolic resin and a resol type phenolic resin at a solid content mass ratio of 1:1), and methanol were mixed at a mass ratio of 8:17:75 instead of a 25 mass% methanol solution of the resin component to fabricate a uniformly dispersed resin composition (viscosity: 3.2 mPa·s at 25°C), and the long carbon fiber paper material was impregnated with the resin composition. The evaluation results of the obtained porous carbon sheet were as shown in Table 1.

### (Example 3)

A porous carbon sheet was obtained in the same manner as in Example 2 except that a graphite powder having an equivalent volume sphere diameter of 15 µm was used. In this case, the viscosity of the resin composition at 25°C was 3.2 mPa·s. The evaluation results of the obtained porous carbon sheet were as shown in Table 1.

### (Example 4)

A porous carbon sheet was obtained in the same manner as in Example 3 except that 14 precursor fiber sheets were stacked and disposed, and hot pressed under the conditions of 155°C and 0.4 MPa. The evaluation results of the obtained porous carbon sheet were as shown in Table 1.

### (Example 5)

A porous carbon sheet was obtained in the same manner as in Example 4 except that a graphite powder having an equivalent volume sphere diameter of 10 µm was used. The evaluation results of the obtained porous carbon sheet were as shown in Table 1.

### (Comparative Example 1)

A porous carbon sheet was obtained in the same manner as in Example 1 except that the concentration of the resin component in the methanol solution including the resin component was 15 mass%. The evaluation results of the obtained porous carbon sheet were as shown in Table 1.

### (Comparative Example 2)

A porous carbon sheet was obtained in the same manner as in Example 1 except that the maximum temperature of the precursor fiber sheet during secondary carbonization was 2,000°C. The evaluation results of the obtained porous carbon sheet were as shown in Table 1.

### (Comparative Example 3)

A porous carbon sheet was obtained in the same manner as in Example 2 except that the maximum temperature of the precursor fiber sheet during secondary carbonization was 2,000°C. The evaluation results of the obtained porous carbon sheet were as shown in Table 1.

**[Table 1-1]**

| | | Unit | Example 1 | Example 2 | Example 3 | Example 4 | Example 5 |
|---|---|---|---|---|---|---|---|
| Production conditions | Secondary carbonization temperature | °C | 2,500 | 2,500 | 2,500 | 2,500 | 2,500 |
| | Viscosity of resin solution at 25°C | mPa·s | 2.5 | 3.2 | 3.2 | 3.2 | 3.2 |
| | Conductive particles | - | Absence | Presence | Presence | Presence | Presence |
| | Equivalent volume sphere diameter of conductive particles | µm | - | 5 | 15 | 15 | 10 |
| | Content of conductive particles | % | - | 23 | 15 | 16 | 18 |
| Properties | Areal weight | g/m² | 1,040 | 1,100 | 1,175 | 1,080 | 1,080 |
| | Thickness (0.15 MPa) | mm | 2.0 | 2.1 | 2.2 | 2.1 | 2.2 |
| | d1/d0 | % | 87 | 90 | 93 | 92 | 91 |
| | d2/d0 | % | 72 | 73 | 71 | 65 | 63 |
| | Electrical resistivity in thickness direction (1.0 MPa) | mΩ·cm | 99 | 92 | 68 | 90 | 86 |
| | Electrical resistivity in thickness direction (4.5 MPa) | mΩ·cm | 79 | 63 | 53 | 67 | 65 |
| | R1 | % | 86 | 90 | 91 | 81 | 80 |
| | R2-R1 | % | 3 | 2 | 4 | 4 | 3 |
| | Protrusion of short carbon fibers | - | Absence | Absence | Absence | Absence | Absence |

**[Table 1-2]**

| | | Unit | Comparative Example 1 | Comparative Example 2 | Comparative Example 3 |
|---|---|---|---|---|---|
| Production conditions | Secondary carbonization temperature | °C | 2,500 | 2,000 | 2,000 |
| | Viscosity of resin solution at 25°C | mPa·s | 1.3 | 2.5 | 3.2 |
| | Conductive particles | - | Absence | Absence | Presence |
| | Equivalent volume sphere diameter of conductive particles | µm | - | - | 5 |
| | Content of conductive particles | % | - | - | 23 |
| Properties | Areal weight | g/m² | 1,050 | 1,080 | 1,130 |
| | Thickness (0.15 MPa) | mm | 1.9 | 2.2 | 2.3 |
| | d1/d0 | % | 89 | 80 | 83 |
| | d2/d0 | % | 79 | 60 | 59 |
| | Electrical resistivity in thickness direction (1.0 MPa) | mΩ·cm | 109 | 136 | 128 |
| | Electrical resistivity in thickness direction (4.5 MPa) | mΩ·cm | 98 | 105 | 82 |
| | R1 | % | 94 | 77 | 81 |
| | R2-R1 | % | 3 | 5 | 7 |
| | Protrusion of short carbon fibers | - | Absence | Presence | Presence |

From Table 1, Examples 1, 2, and 3 of the present invention exhibited compression properties suitable for use in a water electrolysis cell, and thus short carbon fibers did not protrude from the sheet surface, and the conductivity was also favorable. Example 2 in which graphite particles having an equivalent volume sphere diameter of 5 µm were added as conductive nonmetal particles had more favorable compression properties and conductivity, and Example 3 in which graphite particles having an equivalent volume sphere diameter of 15 µm were added had the most favorable conductivity. In Examples 4 and 5, even when the number of the precursor fiber sheets to be integrated was reduced and the pressure during hot pressing was reduced as compared with Example 3, favorable compression properties and conductivity were able to be achieved by adjusting the viscosity of the resin solution and adjusting the equivalent volume sphere diameter of the contained conductive nonmetal particles. In Comparative Example 1, the viscosity of the methanol solution of the resin component was small, and thus the carbides of the phenol resin in the porous carbon sheet had a structure that sterically hindered the porous carbon sheet during compression, and the porous carbon sheet was hardly crushed even when 4.5 MPa was applied, a conductive path in the thickness direction was hardly formed, and electrical resistance was increased. In Comparative Examples 2 and 3, the carbonization temperature was low, causing the carbides of the phenol resin as a binder to become brittle, and thus when 1.0 MPa was applied, the porous carbon sheet was greatly crushed, and the short carbon fibers were observed to protrude. In addition, in Comparative Examples 2 and 3, the graphitization of the carbon fiber and the phenol resin did not sufficiently proceed, and the electrical conductivity and the thickness recovery ratio of the porous carbon sheet were also deteriorated.

### DESCRIPTION OF REFERENCE SIGNS

- 1:: Electrolyte membrane
- 2a:: Anode-side catalyst layer
- 2c:: Cathode-side catalyst layer
- 3a:: Anode-side diffusion layer
- 3c:: Cathode-side diffusion layer
- 4a:: Anode-side bipolar plate
- 4c:: Cathode-side bipolar plate
- 5a:: Anode-side main electrode
- 5c:: Cathode-side main electrode
- 6:: Precursor fiber sheet
- 7:: Hot press
- 8:: Upper heating plate
- 9:: Lower heating plate
- 10:: Spacer
- 11:: Sample
- 12:: Gold-plated stainless steel block
- 13:: Micrometer
- 14:: Polymer electrolyte membrane
- 20:: Compression jig

### INDUSTRIAL APPLICABILITY

The present invention relates to a porous carbon sheet suitably used for a water electrolysis cell, and using the porous carbon sheet of the present invention as a diffusion layer of the water electrolysis cell can provide a water electrolysis cell capable of stably producing hydrogen for a long period of time.

## Claims

1. A porous carbon sheet comprising a sheet-shaped structure having a porous structure in which carbon fibers are bound with a binder, wherein
a thickness d0 under an applied pressure of 0.15 MPa is 1.8 to 3.0 mm,
a thickness d1 under an applied pressure of 1.0 MPa is 85% or more of the thickness d0 under an applied pressure of 0.15 MPa, and
a thickness d2 under an applied pressure of 4.5 MPa is 75% or less of the thickness d0 under an applied pressure of 0.15 MPa.

2. The porous carbon sheet according to claim 1, wherein an electrical resistivity in a thickness direction under an applied pressure of 1.0 MPa is 120 mΩ·cm or less.

3. The porous carbon sheet according to claim 1, wherein an electrical resistivity under an applied pressure of 1.0 MPa is 80 mΩ·cm or less.

4. The porous carbon sheet according to claim 1, wherein an electrical resistivity in a thickness direction under an applied pressure of 4.5 MPa is 90 mΩ·cm or less.

5. The porous carbon sheet according to claim 1, wherein an electrical resistivity under an applied pressure of 4.5 MPa is 60 mΩ·cm or less.

6. The porous carbon sheet according to claim 1, comprising conductive nonmetal particles having an equivalent volume sphere diameter of 10 to 30 µm.

7. The porous carbon sheet according to claim 6, comprising the conductive nonmetal particles in a ratio of 10 to 50 mass% in 100 mass% of the porous carbon sheet.

8. The porous carbon sheet according to claim 1, wherein a thickness recovery ratio R1 when the porous carbon sheet is pressurized to 4.5 MPa and then depressurized to 1.0 MPa is 80% or more.

9. The porous carbon sheet according to claim 1, wherein a difference between a thickness recovery ratio R1 when the porous carbon sheet is pressurized to 4.5 MPa and then depressurized to 1.0 MPa and a thickness recovery ratio R2 when the porous carbon sheet is then pressurized again to 4.5 MPa and then depressurized to 1.0 MPa is 5% or less.

10. A water electrolyzer comprising the porous carbon sheet according to claim 1 as a cathode-side electrode member.
